# EUROPÄISCHE PATENTANMELDUNG

(11) **EP 2 018 926 A1**
(43) Veröffentlichungstag der Anmeldung: **28.01.2009**
(21) Anmeldenummer: 07019759.5
(22) Anmeldetag: 09.10.2007
(51) Int. Cl.: B23K 7/00, B23K 9/013, B23K 10/00, B23K 15/00, B23K 26/14, B23K 26/38

(54) **Verfahren zum thermischen Schneiden mit Veränderung der Zusammensetzung des Schneidgases während des Schneidvorgangs**

(30) Priorität: 26.07.2007 DE 102007035393
(71) Anmelder: Linde Aktiengesellschaft, 80807 München (DE)
(72) Erfinder: Danzer, Wolfgang, 84405 Dorfen (DE); Miklos, Ernst, 85551 Kirchheim (DE)

(57) **Zusammenfassung**

Die Erfindung betrifft ein Verfahren zum thermischen Trennen, wobei ein Schneidgas in eine Schneiddüse geleitet und mittels der Schneiddüse auf ein zu bearbeitendes Werkstück geführt wird, wobei die Zusammensetzung des Schneidgases während des Schneidvorgangs mehrmals, insbesondere periodisch wiederholt verändert wird.

## Beschreibung

Die vorliegende Erfindung betrifft ein Verfahren zum thermischen Trennen, wobei ein Schneidgas in eine Schneiddüse geleitet und mittels der Schneiddüse auf ein zu bearbeitendes Werkstück geführt wird.

Es sind eine Reihe von Verfahren zum thermischen Trennen bekannt. Beim thermischen Trennen werden Werkstücke geschnitten, indem an die zu schneidende Stelle des Werkstücks Energie zugeführt wird, wodurch vom Werkstück an der zu bearbeitenden Stelle Material entfernt wird. Das zu entfernende Material wird mit Hilfe des Schneidgasstrahls ausgetrieben.

Die thermischen Trennverfahren haben den Vorteil auf, dass sie als berührungslose Materialbearbeitungsverfahren keine Abnutzung des Schneidwerkzeugs aufweisen.

Die thermischen Trennverfahren werden nach der Art ihrer Energiezufuhr klassifiziert:

Beim autogenen Brennschneiden wird der Werkstoff mit einer Brenngas-Sauerstoff-oder Brenngas-Luft-Flamme auf Zündtemperatur erhitzt und im Schneidsauerstoffstrom oder in einem sauerstoffhaltigen Schneidgasstrom verbrannt. Durch die Verbrennung des Werkstoffs im Schneidsauerstoff wird dem Schneidprozess zusätzlich zur Flamme Energie zugeführt. Mit der kinetischen Energie des Sauerstoffstrahls werden die durch die Verbrennung entstehende Schlacke und der geschmolzene Werkstoff ausgetrieben.

Das Plasmaschneiden in erster Linie ein Schmelzprozess, bei welchem der Grundwerkstoff durch den Plasmalichtbogen geschmolzen und auch verdampft wird. Als Plasmalichtbogen bezeichnet man einen durch eine gekühlte Düse eingeschnürten ionisierten und dissoziierten Gasstrahl. Durch die Einschnürung erhält man einen Plasmastrahl mit hoher Energiedichte. Das Grundmaterial wird in der Schnittfuge durch den Plasmastrahl augenblicklich aufgeschmolzen und durch das Plasmagas aus der entstehenden Fuge geschleudert. Die zur Einschnürung notwendige Kühlung der Düse erfolgt üblicherweise entweder mittels Wasser und/oder mittels eines Sekundärgases, welches den Plasmastrahl umhüllt. Das Sekundärgas strömt also als Gasmantel um den Plasmalichtbogen, schnürt ihn weiter ein und verbessert die Schnittgüte und Schneidgeschwindigkeit. Die Anlagen, welche zusätzlich mit Sekundärgas als Kühlgas arbeiten, erzielen gute Schneidleistungen. Eine Variante des Plasmaschneidens mit Sekundärgas ist das Feinstrahl-Plasmaschneiden, bei welchem der Plasmastrahl sehr stark eingeschnürt wird. Ferner gibt es auch die Möglichkeit durch zusätzliche Wasserinjektion den Plasmastrahl weiter einzuschnüren. Das schmelzflüssige Material wird durch die hohe kinetische Energie des Plasmagases ausgetrieben. Bei Verwendung eines Sekundärgases bläst auch dieses das flüssige Material aus. Als Plasmagas werden meist Argon, Stickstoff und Wasserstoff und Mischungen daraus eingesetzt. Dem Plasmagas wird in manchen Fällen auch Sauerstoff zugegeben, wobei der Sauerstoff zu einer Oxidation mit dem Werkstoff führen kann und dadurch zusätzliche Energie einbringt. Auch mit Druckluft als Gas wird gearbeitet. Bisweilen wird auch Kohlendioxid zugegeben. Wird ein Sekundärgas verwendet, wird auch für dieses eine Gas oder eine Gasmischung aus den eben genannten Gasen eingesetzt. Die Wahl des Gases beziehungsweise der Gaszusammensetzung wird durch die Verfahrenvariante und vor allem durch Dicke und Art des zu schneidenden Werkstoffes bestimmt.

Beim Laserstrahlschneiden wird ein Laserstrahl als Schneidwerkszeug benutzt. Dazu wird der Laserstrahl auf die gewünschte Stelle gelenkt, wofür in der Regel mit einer Linse im Schneidkopf der Laserstrahl auf die Oberfläche des zu schneidenden Werkstücks oder in das Innere des Werkstücks fokussiert wird, wobei die hohe Energiedichte den zu schneidenden Werkstoff schnell erwärmt. Beim Laserstrahlschmelzschneiden wird das Material auf Schmelztemperatur erwärmt und beim Lasersublimierschneiden auf Verdampfungstemperatur. Beim Laserstrahlbrennschneiden wird an die zu schneidende Stelle Sauerstoff geleitet, damit, wie zum Brennschneiden notwendig, durch die Verbrennung des Sauerstoffs mit dem Werkstoff zusätzliche Energie eingebracht wird. Der Laserstrahl erwärmt dazu das Werkstück an der Bearbeitungsstelle fortwährend auf die Entzündungstemperatur, so dass die Verbrennung des Werkstoffmaterials mit dem Schneidsauerstoff stattfinden kann. Das geschmolzene Material wird beim Laserstrahlschneiden mit dem Schneidgas aus der Schnittfuge ausgetrieben, wobei beim Laserstrahlbrennschneiden der Schneidsauerstoffstrahl neben dem geschmolzenen Material auch die entstehende Schlacke austreibt. Als Schneidgas wird beim Laserstrahlbrennschneiden Sauerstoff, ansonsten wird als Schneidgas meist Stickstoff, Argon und/oder Helium verwendet. Auch Druckluft wird eingesetzt. Der Laserstrahl ist ein ideales Werkzeug, um metallische und nichtmetallische Werkstoffe geringer Dicken zu schneiden. Mit zunehmender Werkstoffdicke nimmt die Schneidgeschwindigkeit des Laserstrahls jedoch stark ab. So können beispielsweise beim Laserstrahlbrennschneiden Bleche mit einer Dicke von etwa zwei Millimetern sechsmal schneller als Bleche mit einer Dicke von etwa fünfzehn Millimetern geschnitten werden.

Beim Laserstrahlschneiden kann die Schneidgeschwindigkeit erhöht werden, indem das Schneidgas in einem turbulenten Strom zugeführt wird. So ist beispielsweise aus der Druckschrift DE 43 36 010 A1 eine Laserschneidvorrichtung bekannt, bei der mittels eines Bearbeitungskopfes ein Haupthilfsgas und ein Nebenhilfsgas derart zugeführt werden, so dass sich der Gasstrom insgesamt in einem turbulenten Strömungszustand befindet. Ferner ist aus der DE 10 2004 052 323 A1 bekannt, dass durch eine modulierte Bewegung des Schneidkopfs die Scheidgeschwindigkeit beziehungsweise die zu schneidende Blechdicke erhöht werden kann. Auch durch eine nicht näher ausgeführte Modulierung von Laserleistung und Gasdruck kann dies erreicht werden. Die Druckschrift DE 10 2005 049 010 A1 offenbart ein Verfahren zum Laserstrahlschneiden, bei dem eine Druckmodulation des Schneidgasstroms durch den Einsatz von Schallwellen oder einer elektrischen Gasentladung eingesetzt wird.

Für das Plasmaschneiden ist es bekannt aus der SU 1683927 den Plasmastrahl durch Änderungen des dem Plasmalichtbogen zugrunde liegenden elektrischen Stroms zu pulsieren. Aus der GB 2194190 ist es bekannt einen Überschall-Plasmastrahl derartig zu modulieren, dass eine Perforierung geschnitten oder geschweißt werden kann. Dazu ist die Leistungsdichte abwechselnd über unter der Schwelle zum Schneiden beziehungsweise Schweißen. Erreicht wird dies durch Modulation des Gasflusses oder Modulation der elektrischen Leistung, mit welcher der Plasmalichtbogen betrieben wird.

Für das autogene Brennschneiden ist aus der Druckschrift DE 101 48 168 A1 ein Verfahren bekannt, bei dem das Schneidgas in der Schnittfuge turbulent strömt. Hierbei wird die Turbulenz des Gasstroms durch Pulsen mit einem Ventil oder durch einen weiteren diskontinuierlichen Gasstrom erzeugt. Das Dokument SU 812461 offenbart gepulste, zusätzliche Sauerstoffströme, die einem Hauptsauerstoffstrom in einem Schneidverfahren unter einem bestimmten Winkel zugeführt werden. In dem Dokument EP 533 387 A2 ist eine Vorrichtung und ein Verfahren zum Brennschneiden, insbesondere zum Laser-Brennschneiden, beschrieben, bei dem ein Hilfsgas in Form von Gaspulsen der Schneidvorrichtung zugeführt wird.

Aufgabe der vorliegenden Erfindung ist es ein thermisches Trennverfahren zur Verfügung zu stellen, das hinsichtlich der Schnittqualität und Stabilität des Schneidvorgangs verbessert ist, auch bei hohen Schneidgeschwindigkeiten und bei dicken Blechen.

Die gestellte Aufgabe wird dadurch gelöst, dass die Zusammensetzung des Schneidgases während des Schneidvorgangs mehrmals verändert wird. Durch die Änderung der Zusammensetzung des Schneidgases wird die Prozesstabilität deutlich erhöht. Des Weiteren erhöht der durch die Änderung der Zusammensetzung pulsierende Schneidgasstrom vorteilhaft die maximal realisierbare Schnittgeschwindigkeit, mit besonderem Vorteil ohne die Streckenenergie, d.h. den Energieeintrag in das Werkstück pro Länge des Schnittes, signifikant zu erhöhen.

Der Bezug auf eine mehrmalige zeitliche Änderung soll dazu dienen die vorliegende Erfindung von einfachen Aus- und Einschaltvorgängen am Beginn und am Ende eines Schneidprozesses sowie von einfachen Spülvorgängen klar abzugrenzen. Unter mehrmalig ist dabei mindestens 10 mal, bevorzugt mindestens 20 mal, besonders bevorzugt mindestens 50 mal zu verstehen. Mit besonderem Vorteil werden die beschriebenen Änderungsvorgänge während der gesamten Dauer eines Schneidprozesses durchgeführt.

Die Veränderung der Zusammensetzung umfasst hierbei sowohl ein Aus- und Einschalten von zumindest einer Komponente als auch ein mehrmaliges zeitweiliges Vermindern von mindestens einer Komponente. So wird beispielsweise bei einem Gemisch aus den Komponenten A und B zeitweise nur die Komponente A zugeführt wird. Die Komponente A wird also periodisch wiederholt aus- und wieder eingeschalten. Die Komponente B kann dann beispielsweise ebenfalls aus- und wieder eingeschalten werden, wobei das Aus- und Einschalten der Komponente B zum Aus-und Einschalten der Komponente A zeitlich versetzt ist, wobei es insbesondere derartig zeitlich versetzt ist, dass die Komponenten A und B sich abwechseln. Beispielsweise ist es auch möglich, dass die Komponente A aus- und eingeschaltet und währenddessen die Komponente B unverändert zugeführt wird. Oder, als weitere beispielhafte Möglichkeit, die Komponente A aus- und einzuschalten und gleichzeitig die Komponente B zu vermindern. Möglich ist es beispielsweise auch, die Komponente A oder B zeitweise ungleichmäßig zueinander zu vermindern, so dass sich die Zusammensetzung ändert. Es können auch Gemische mit mehr als zwei Komponenten eingesetzt werden, wobei dann entweder nur ausgewählte oder alle Komponenten nacheinander oder/und gleichzeitig aus- und eingeschalten oder lediglich im Volumenstrom zeitweise vermindert werden können, wobei die Änderung im Volumenstrom einer oder mehrerer Komponenten in einer Änderung der Zusammensetzung mündet. Dabei ist es stets so, dass zumindest eine Komponente zumindest in verminderter Menge an die Bearbeitungsstelle geführt wird. Eine Komponente des Schneidgases kann dabei unter Umständen auch aus einer Gasmischung und nicht aus einem einzigen Gas bestehen, so dass anstelle von Komponenten auch von Teilströmen gesprochen werden kann.

Es wurde gefunden, dass mit der vorliegenden Erfindung die Qualität der Schnitte und Schnittkanten gegenüber dem Stand der Technik deutlich verbessert werden konnte. Die Prozessstabilität und Reproduzierbarkeit des Verfahrens sind weiter erhöht. Das Austreiben des flüssigen Materials und gegebenenfalls auch der Schlacke aus der Schnittfuge erfolgt zügiger, gleichmäßiger und vollständiger als bei den bekannten Verfahren. Diese Verbesserungen des Verfahrens erlauben eine weitere Erhöhung der Schneidgeschwindigkeit ohne Qualitätseinbußen. Insbesondere beim Brennschneiden zeigt sich ein weiterer Vorteil: Die Oxidhaut, die bei der Verbrennung des Sauerstoffs in der Schnittfuge entsteht, wird durch die Rücknahme des Sauerstoffs und die Zugabe eines zweiten, insbesondere eines inerten oder reaktionsträgen Gases immer wieder aufgebrochen, so dass der Sauerstoff immer wieder auf eine blanke Oberfläche trifft und mit dieser reagieren kann. Dieser Vorteil zeigt sich besonders ausgeprägt beim Laserbrennschneiden, aber auch beim autogenen Brennschneiden und beim Plasmaschneiden mit Sauerstoff in Plasmagas und/oder Sekundärgas.

Bevorzugt wird die Zusammensetzung des Schneidgases periodisch wiederholt verändert. Besonders bevorzugt wird die Veränderung der Zusammensetzung des Schneidgases mit einer konstanten Periode durchgeführt.

Besonders bevorzugt ist das Schneidgas aus mindestens zwei Komponenten zusammengesetzt, von denen mindestens eine Komponente periodisch wiederholt aus- und eingeschalten wird. Besonders bevorzugt werden bei zwei Komponenten diese so aus- und eingeschalten, dass sich diese Abwechseln. Ein Abwechseln der Komponenten ist besonders einfach durchzuführen und die Vorteile der Erfindung zeigen sich in hervorragender Weise. Weitere Möglichkeiten, die ebenfalls zu den erfindungsgemäßen Vorteilen führen, sind in einem vorherigen Absatz ausgeführt. Die Aufzählung dort ist jedoch nicht erschöpfend.

Die Änderung der Zusammensetzung wird bevorzugt durch ein abwechselndes Aus-und Einschalten der Komponenten des Schneidgases erreicht, wobei die Dauer des ausgeschalteten Zustandes zum eingeschalteten Zustand gleich- oder verschiedenlang ausgebildet sein kann.

Statt dem wiederholten Aus- und Einschalten kann die Zusammensetzung auch lediglich durch Vermindern und wieder Erhöhen des Durchflusses durch eine oder mehrere Zuleitungen für die einzelnen Komponenten des Schneidgases erzeugt werden.

Zum Beispiel wird beim Einsatz von Stickstoff und Sauerstoff der Stickstoff wiederholt abgeschalten oder zumindest vermindert (auch lediglich eine Verminderung kann bereits zu guten Ergebnissen führen). Der Stickstoffpuls entfernt in diesem Beispiel die Oxidschicht, die sich durch den Kontakt der Werkstückoberfläche mit dem Sauerstoff gebildet hat. Die Werkstückoberfläche wird somit temporär immer wieder gereinigt und das Schneidgas trifft vorteilhaft immer wieder auf eine blanke Oberfläche. Der Sauerstoffstrom kann ebenfalls periodisch, bevorzugt antizyklisch zum Stickstoffstrom, vermindert oder auch ausgeschalten werden. Dieses Beispiel kann auch auf andere Gase und Zusammensetzungen übertragen werden.

Vorteilhafterweise wird als Schneidgas Sauerstoff, Stickstoff, Argon, Wasserstoff oder ein Gemisch, das zumindest ein Gas aus dieser Gruppe enthält, eingesetzt. Auch Kohlendioxid kann eingesetzt werden.

Gemäß einer vorteilhaften Weiterbildung der Erfindung wird zusätzlich der Volumenstrom des Schneidgases während des Schneidvorgangs mehrmals verändert. Durch Veränderung auch des Volumenstrom, der gegen das Werkstück gerichtet wird, können die Vorteile der Erfindung unterstützt werden.

Gemäß einer besonders vorteilhaften Ausgestaltung der Erfindung wird die Änderung der Zusammensetzung und gegebenenfalls des Volumenstroms des Schneidgases mit einem periodisch unverändert wiederkehrenden Verlauf durchgeführt. Die Änderung des Gasvolumenstroms über die Zeit kann z.B. zumindest zum Teil durch ein Rechteck-, Dreieck- oder Sinusprofil oder Kombinationen davon dargestellt werden. Die Änderung der Zusammensetzung z.B. eines zweikomponentigen Prozessgases kann beliebige Kurvenformen, besonders auch die oben genannten, annehmen. Dabei gilt es Darstellungen, bei denen auf der x- und y-Achse einer Darstellung jeweils eine Komponente des Prozessgases angetragen ist von Darstellungen, bei denen die Komponenten in y-Richtung und die Zeit in x-Richtung angetragen ist, zu unterscheiden.

Für bestimmte Anwendungen kann auch ein periodisch modifiziert wiederkehrender Verlauf besonders vorteilhaft sein.

Eine vorteilhafte Weiterbildung der Erfindung sieht vor, dass die Zusammensetzung und gegebenenfalls der Volumenstrom des Schneidgases mittels mindestens eines veränderlichen Strömungsbegrenzers und/oder mittels mindestens eines Ventils verändert wird. Vorteilhaft wird z.B. ein stufenlos steuer- oder regelbares Ventil eingesetzt. Für die Änderung der Zusammensetzung des Schneidgases werden bevorzugt stufenlos steuer- oder regelbare Ventile eingesetzt, die jeweils in den Zuleitungen für die einzelnen Komponenten des Schneidgases angebracht sind. Insbesondere eigen sich magnetische oder piezoelektrische Ventile. Eine andere Möglichkeit ist es, dass mindestens ein weiterer Gasstrom entsprechend zugeschalten wird. Auch ein Bypass kann Anwendung finden.

Eine bevorzugte Ausführungsform der Erfindung sieht vor, dass das Verfahren mit einer Periodizität von niedriger Frequenz durchgeführt wird, insbesondere mit Frequenzen bis zu 500 Hz, bevorzugt mit Frequenzen aus dem Bereich von 0,5 bis 100 Hz, besonders bevorzugt mit Frequenzen aus dem Bereich von 1 bis 50 Hz. Frequenzen aus dem Bereich von 3 bis 20 Hz haben sich in der Praxis als besonders wirkungsvoll erwiesen.

Eine alternative, ebenfalls sehr vorteilhafte Ausführungsform der Erfindung sieht vor, dass das Verfahren mit einer Periodizität durchgeführt wird, die eine Frequenz aus dem Bereich von 500 Hz bis 8000 Hz aufweist, bevorzugt von 700 bis 5000 Hz, besonders bevorzugt von 1000 bis 3000 Hz. Bei Verwendung von solch hohen Frequenzen bildet sich ein eine stehende, schwingende Drucksäule aus; es entsteht eine stehende Welle. Die stehenden, schwingenden Drucksäule ermöglicht eine optimale Druckverteilung und einen erhöhten Kraftübertrag auf das Werkstück. Dies stellt eine deutliche Verbesserung gegenüber den bekannten Verfahren dar.

Mit besonderem Vorteil wird das thermische Trennen gemäß der vorliegenden Erfindung mittels der Methode des autogenen Brennschneidens, des Laserschneidens, insbesondere des Laser-Brennschneidens und/oder des Laser-Schmelzschneidens und/oder des Plasmaschneidens ausgeführt. Auch für das Lasersublimierschneiden eignet sich die Erfindung. Beim Plasmaschneiden kann die Zusammensetzung über das Plasmagas und/oder das Sekundärgas erfolgen. Besonders vorteilhaft ist es aber beim Plasmaschneiden mit Plasma- und Sekundärgas, wenn die Veränderung der Zusammensetzung durch eine Modulation des Sekundärgases erreicht wird und das Plasmagas während des Schneidvorgangs unverändert bleibt.

Durch geeignete Wahl der Kombinationsmöglichkeiten der erfindungsgemäßen Ausgestaltungen kann das thermische Trennen mit besonderem Vorteil aufgabenspezifisch optimiert werden.

Beispielsweise kann somit bei einem Gemisch aus Stickstoff und Sauerstoff als Schneidgas der Schneidsauerstoff und der Stickstoff periodisch wiederholt und abwechselnd aus- und wieder eingeschalten werden. Dadurch kann eine besonders vorteilhafte Steuerung der Oxidationsvorgänge durch die Zerstörung der Oxidhaut durch den Stickstoff und ein dann wieder ungehinderter Zutritt des Sauerstoffs zum Werkstück erzielt werden. Insbesondere beim Laserbrennschneiden zeigen sich diese Vorteile. Durch zusätzliche Variation des Gesamtvolumenstroms des Schneidgases können diese Vorgänge weiter optimiert werden. Zum Aus- und Einschalten des Sauerstoffstroms und/oder des Stickstoffstroms wird z.B. besonders vorteilhaft ein piezoelektrisches Ventil eingesetzt, das für die bevorzugten Frequenzbereiche, die bereits genannt wurden, geeignet ausgelegt ist.

Gemäß einem weiteren Beispiel kann somit bei einem Gemisch aus Stickstoff und Sauerstoff als Schneidgas der Schneidsauerstoff und/oder der Stickstoff periodisch wiederholt vermindert werden, womit der Anteil an Sauerstoff im Schneidgas und damit die Zusammensetzung des Schneidgases verändert wird. Dadurch kann eine besonders vorteilhafte Steuerung der Oxidationsvorgänge durch die Zerstörung der Oxidhaut durch den Stickstoff und ein dann wieder ungehinderter Zutritt des Sauerstoffs zum Werkstück erzielt werden. Durch zusätzliche Variation des Gesamtvolumenstroms des Schneidgases können diese Vorgänge weiter optimiert werden.

## Patentansprüche

1. Verfahren zum thermischen Trennen, wobei ein Schneidgas in eine Schneiddüse geleitet und mittels der Schneiddüse auf ein zu bearbeitendes Werkstück geführt wird, **dadurch gekennzeichnet, dass** die Zusammensetzung des Schneidgases während des Schneidvorgangs mehrmals verändert wird.

2. Verfahren nach Anspruch 1, **dadurch gekennzeichnet, dass** die Zusammensetzung des Schneidgases periodisch wiederholt verändert wird.

3. Verfahren nach Anspruch 1 oder 2, **dadurch gekennzeichnet, dass** das Schneidgas aus mindestens zwei Komponenten zusammengesetzt ist, von denen mindestens eine Komponente periodisch wiederholt aus- und eingeschalten wird.

4. Verfahren nach einem der Ansprüche 1 bis 3, **dadurch gekennzeichnet, dass** die Komponenten des Schneidgases abwechselnd aus- und eingeschalten werden.

5. Verfahren nach einem der Ansprüche 1 bis 4, **dadurch gekennzeichnet, dass** als Schneidgas Sauerstoff, Stickstoff, Argon, Wasserstoff oder ein Gemisch, das zumindest ein Gas aus dieser Gruppe enthält, eingesetzt wird.

6. Verfahren nach einem der Ansprüche 1 bis 5, **dadurch gekennzeichnet, dass** der Volumenstrom des Schneidgases während des Schneidvorgangs mehrmals verändert wird.

7. Verfahren nach einem der Ansprüche 1 bis 6, **dadurch gekennzeichnet, dass** ein Ventil, insbesondere ein magnetisches oder ein piezoelektrisches Ventil verwendet wird.

8. Verfahren nach einem der Ansprüche 1 bis 7, **dadurch gekennzeichnet, dass** das Verfahren mit einer Periodizität von niedriger Frequenz durchgeführt wird, insbesondere mit Frequenzen bis zu 500 Hz, bevorzugt mit Frequenzen aus dem Bereich von 0,5 bis 100 Hz, besonders bevorzugt mit Frequenzen aus dem Bereich von 1 bis 50 Hz.

9. Verfahren nach einem der Ansprüche 1 bis 7, **dadurch gekennzeichnet, dass** das Verfahren mit einer Periodizität durchgeführt wird, die eine Frequenz aus dem Bereich von 500 Hz bis 8000 Hz aufweist, bevorzugt von 700 bis 5000 Hz, besonders bevorzugt von 1000 bis 3000 Hz.

10. Verfahren nach einem der Ansprüche 1 bis 9, **dadurch gekennzeichnet, dass** das thermische Trennen mittels der Methode des autogenen Brennschneidens und/oder des Laser-Brennschneidens und/oder des Laser-Schmelzschneidens und/oder des Plasmaschneidens ausgeführt wird.
